# EUROPÄISCHE PATENTSCHRIFT

(11) **EP 3 050 689 B1**
(45) Veröffentlichungstag und Bekanntmachung des Hinweises auf die Patenterteilung: **14.03.2018**
(21) Anmeldenummer: 15197929.1
(22) Anmeldetag: 04.12.2015
(51) Int. Cl.: B29B 17/04, B29B 7/90, B29B 17/00, B07B 1/46, B07B 13/04, B29K 105/06, B29K 307/04, B29B 17/02, B29B 7/38

(54) **VERFAHREN ZUM RECYCLING VON CARBONFASERHALTIGEN MATERIALIEN**
METHOD FOR RECYCLING MATERIALS COMPRISING CARBON FIBRES
PROCÉDÉ DE RECYCLAGE DE MATÉRIAUX COMPRENANT DES FIBRES DE CARBONE

(30) Priorität: 08.12.2014 DE 102014225105
(43) Veröffentlichungstag der Anmeldung: 03.08.2016
(73) Patentinhaber: Currenta GmbH & Co. OHG, 51368 Leverkusen (DE); LANXESS Deutschland GmbH, 50569 Köln (DE)
(72) Erfinder: BEYER, Joachim, 51515 Kürten (DE); LEHMANN, André, 52379 Langerwehe (DE); ULFIK, Benno, 51379 Leverkusen (DE); NICKEL, Stefanie, 47877 Willich (DE)
(74) Vertreter: BIP Patents

(56) Entgegenhaltungen:
- EP-A1- 2 789 441
- WO-A1-2014/037724
- DE-A1- 1 454 875
- DE-C1- 3 842 072
- DE-U1- 9 000 291
- JP-A- 2004 338 194
- US-A1- 2007 045 456

## Beschreibung

Die vorliegende Erfindung betrifft ein Verfahren zur Aufbereitung von carbonfaserhaltigen Produktionsresten oder fertigen Bauteilen. Dabei wird die Carbonfaser so aufbereitet, dass sie in einem konventionellen Verarbeitungsverfahren wieder in einen Kunststoff eingearbeitet werden kann.

Carbonfasern werden zur Verstärkung von thermoplastischen oder duroplastischen Kunststoffen eingesetzt. Bisher werden sie überwiegend als Endlosfasern in einer duroplastischen Matrix eingesetzt, da so maximale Verstärkungseffekte über einen weiten Temperaturbereich zu erzielen sind.

Die daraus entstehenden Bauteile werden z.B. im Flugzeugbau oder in Windkraftanlagen eingesetzt. Durch die zunehmenden Massenanwendungen nimmt auch die Menge an carbonfaserhaltigen Produktionsresten und Bauteilen deutlich zu.

Da Carbonfasern in einem sehr aufwändigen thermischen Prozess hergestellt werden, sind sie vergleichsweise teuer (15 - 300 €/kg, letzteres für Sondertypen). Daher ist es ökonomisch und ökologisch sinnvoll, die Fasern aus Produktionsresten und ausgedienten Bauteilen einer Wiederverwertung zuzuführen. Für eine Wiederverwertung erscheint eine Aufbereitung zu einer Kurzfaser sinnvoll, wie sie als Glasfaser in Thermoplasten bereits seit Jahrzehnten sehr erfolgreich zur mechanischen Verstärkung eingesetzt wird. Insbesondere die aktuellen Leichtbau-Bestrebungen, die bessere mechanische Eigenschaften bei geringerem Gewicht zum Ziel haben, lassen den Einsatz der Carbonfasern für technische thermoplastische Bauteile sinnvoll erscheinen.

Dabei ist es wünschenswert, die hervorragenden Eigenschaften weitgehend zu erhalten, so dass eine solche Faser die teure Neuware-Faser ersetzen oder aufgrund preislicher Vorteile sogar zusätzliche Anwendungen erschließen kann.

In den Produktionsabfällen bzw. Altteilen liegen die Carbonfasern überwiegend als Endlosfasern vor, gegebenenfalls in einer duroplastischen Matrix. Soll eine Carbonfaser, die für den Einsatz als Endlosfaser in einer duroplastischen Matrix vorgesehen war, als Kurzfaser in einer thermoplastischen Matrix eingesetzt werden, sind hinsichtlich Verarbeitung und Eigenschaften einige Punkte zu beachten. Eine gewisse Rolle spielt dabei unter anderem die Schlichte, die auf diesen Fasern aufgebracht wird, bzw. die daraus resultierenden spezifischen Eigenschaften der Faser.

Diese Schlichte hat im Wesentlichen drei Aufgaben:
- Verklebung der Einzelfasern (Filamente) zu Faserbündeln (Rovings) zur Erhöhung der Stabilität und der Schüttdichte
- Verarbeitungshilfe: je nach Verarbeitungsverfahren:
   a. Als Kurzfaser: zur Erhöhung der Rieselfähigkeit (notwendig für Prozessfähigkeit in der Compoundierung)
   b. Als Endlosfaser zu einem textilen Halbzeug verarbeitet zur Erhöhung der Widerstandsfähigkeit gegen Reibung der Kett- und Schussfäden
- c. Verbesserung der Faser-Matrix-Haftung (abgestimmt auf die jeweilige Faser-Matrix-Materialkombination)

Daraus ergeben sich für die Aufbereitung die folgenden Gesichtspunkte:
- Bei einer mechanischen Bearbeitung der Carbonfaser werden die Faserbündel aufgerissen, die Schüttdichte wird erhöht, die Filamente (Einzelfasern) verhaken sich ineinander, eine weitere Verarbeitung (z.B. Dosierung) wird deutlich erschwert.
- Eine Faser, die für die Verarbeitung zu einem textilen Halbzeug bestimmt war, hat eine dafür geeignete Schlichte, die jedoch eine Rieselfähigkeit (notwendig für eine Compoundierung) nicht gewährleistet.
- Eine Schlichte, die für eine gute Haftung einer bestimmten Faser-Matrix-Kombination optimiert ist, ist in der Regel nicht optimal für eine andere Faser-Matrix-Kombination.

Die vorliegende Erfindung löst die Aufgabe, Carbonfasern aus Gelege-Verschnittresten in eine Form mit hinreichend guten verarbeitungstechnischen Eigenschaften zu bringen, die eine Weiterverarbeitung in einer anschließenden Compoundierung ermöglicht.

Carbonfaser-Gelege sind nichtgewebte textile Flächengebilde. Zu ihrer Herstellung werden endlose Carbonfaserbündel (Rovings) parallel nebeneinander liegend mittels Glasfaser-Nähgarn in ihrer Lage fixiert. Zum Herstellen von Carbonfaser-verstärkten Bauteilen werden sogenannte Multiaxialgelege verwendet. Diese bestehen aus mehreren, mit einander punktuell verklebten Lagen dieser sogenannten unidirektionalen Gelege in der gewünschten Ausrichtung (z.B. 0°, 90°, - 45° und +45°). Das Formteil für die Bauteilherstellung wird aus dieser mehrlagigen Matte ausgeschnitten. In Pressformen wird die Kunststoffmatrix eingebracht.

Der Rohstoff für die hier vorliegende Erfindung sind insbesondere die bei der Verarbeitung der Carbonfaser-Gelege anfallenden Verschnittreste. Grundsätzlich denkbar ist aber auch die Verwendung von Recyclatfasern aus Bauteilen, bei denen die Kunststoffmatrix thermisch entfernt wurde, sowie weitere enthaltene Materialien wie insbesondere Gewebe, Vliesstoffe, Gesticke, Geflechte, Matten, Feinschnitt oder Abstandsgewebe.

Gewebe entstehen durch das Verweben von Endlosfasern, beispielsweise von Rovings. Das Verweben von Fasern geht zwangsläufig mit einer Ondulation der Fasern einher. Die Ondulation bewirkt insbesondere eine Absenkung der faserparallelen Druckfestigkeit. Daher werden für mechanisch hochwertige Faser-Kunststoff-Verbunde Gelege verwendet.

In einem Gelege liegen die Fasern ideal parallel und gestreckt. Es finden ausschließlich Endlosfasern Verwendung. Gelege werden durch eine Papier- oder Fadenheftung zusammengehalten.

Werden die Fasern nicht ausschließlich in der Ebene orientiert, so spricht man von Multiaxialgelegen. Meist werden die zusätzlichen Fasern senkrecht zur Laminatebene orientiert, um das Delaminations- und Impactverhalten zu verbessern.

Möchte man einzelne Rovings in der Ebene nicht nur gestreckt aufbringen, sondern auf beliebigen Bahnen, so verwendet man Gesticke. Die Rovings werden dabei auf ein Trägermaterial (z. B. ein Vlies) gestickt und so fixiert. Gesticke werden häufig im Bereich von Lasteinleitungen verwendet, da hier oft eine komplexe Faserorientierung gewünscht ist. Gesticke werden als Vorformlinge für das RTM-Verfahren (Resin Transfer Moulding) verwendet.

Im Flechtverfahren werden aus Rovings hauptsächlich Schläuche geflochten, die der Herstellung von Rohren, Behältern oder allgemein hohlen Bauteilen dienen.

Sollen Bauteile mit quasiisotropen Eigenschaften hergestellt werden, bieten sich Fasermatten an. Die Matten bestehen meist aus Kurz- und Langfasern, die locker über ein Bindemittel miteinander verbunden werden. Durch den Einsatz von Kurz- und Langfasern sind die mechanischen Eigenschaften von Bauteilen aus Matten denen von Geweben unterlegen.

Vliesstoffe werden z. B. durch das Vernadeln von Langfasern hergestellt. Sie dienen, als dünne Schicht aufgebracht, dem Oberflächenschutz oder der Reduzierung der Oberflächenwelligkeit. Die mechanischen Eigenschaften sind quasiisotrop und denen von Geweben unterlegen.

Feinschnitte finden hauptsächlich als Füllstoff Verwendung. Sie können die mechanischen Eigenschaften von Reinharzbereichen erhöhen und gegebenenfalls die Dichte herabsenken.

Abstandsgewebe dienen zur Herstellung von Sandwichstrukturen.

In einem typischen Verfahrensablauf werden die Carbonfaser-Verschnittreste geschnitten und anschließend die geschnittenen Carbonfaserstücke dem Recycling zugeführt.

Die Verschnittreste der Carbonfasermatten werden beispielsweise zunächst in Stücke mit Längen im Bereich 6 mm bis 200 Millimeter geschnitten, vorzugsweise in 6 bis 10mm Kantenlänge. Dies kann mit Guillotine-Schneidemaschinen durchgeführt werden, wie sie z.B. von der Firma Pierret, Belgien, hergestellt werden.

Die Beschickung der Guillotine-Schneidemaschinen kann dabei manuell erfolgen. Es ist aber auch eine automatische Beschickung mit Ballenware möglich, wenn ein Ballenreißer verwendet wird. Die oben genannte Firma Pierret stellt auch geeignete Ballenreißer zum Vorzerkleinern von Ballen aus Carbonfaser-Matten her.

Die in Streifen oder Chips geschnittenen Carbonfasermatten lösen sich jedoch nicht vollständig in einzelne rieselfähige Faserbündel auf, sondern bilden zu einem erheblichen Anteil wollartige Knäuel. Diese wollartigen Schnitt-Fasern sind in konventionellen Dosiergeräten nicht verwendbar, wie sie z.B. für die Beschickung von Verstärkungsadditiven in Compoundern genutzt werden. Sie führen sofort zum Blockieren der Krählwerke und Dosierschnecken.

Grundsätzlich ist es denkbar, aus den geschnittenen Fasermatten rieselfähige Kurzfaser-Bündel auszusortieren. Diese Kurzfaser-Bündel können mit einer entsprechend der Fließfähigkeit der Kurzfaser angepassten Dosierung direkt in einem Extruder eincompoundiert werden. Diese Siebung kann mit üblichen Plan- und Wurfsieben durchgeführt werden.

Das wollartige Aufgabegut muss dabei immer wieder umgewälzt werden, um den Faserbündeln die Möglichkeit zu geben, aus dem Haufwerk gelöst zu werden. Dieser Auflockerungs- und Durchmischungsvorgang kann mit Siebmaschinen vorgenommen werden, die eine starke Wurfbewegung auf das Siebgut ausüben, wie z.B. Stangenroste oder Spannwellsiebe. Dabei ist aber die Ausbeute an gesiebter Faser gering und liegt bei Schnittfaser-Wolle aus unidirektionalen Gelegen bei maximal etwa 30 % des Aufgabegutes.

Mehrlagige Verschnittreste lassen sich noch deutlich schlechter auflösen. Hier kann die Ausbeute an rieselfähigen Fasern unter 30 % sinken. Auch sind Schnittfasern aus mehrlagigen Verschnittresten schon deutlich stärker aufgespleißt, so dass die Rieselfähigkeit der ausgesiebten Fraktion im Vergleich zu Siebfraktionen aus einlagigen Verschnittresten herabgesetzt wird.

Es bestand daher die Aufgabe, in einem Verfahren die nicht rieselfähige wollartige Fraktion der Carbonfasern aus Gelege-Verschnittresten in eine Form mit hinreichend guten verarbeitungstechnischen Eigenschaften zu bringen, die eine Weiterverarbeitung in einer anschließenden Compoundierung ermöglicht. Weiterhin bestand die Aufgabe darin, ein Verfahren bereitzustellen, mit dem ein möglichst hoher Faserfüllgrad erreicht werden kann, insbesondere ein Faserfüllgrad von 40% oder mehr, ein Faserfüllgrad von 40% vorzugsweise ein Faserfüllgrad von 50% und mehr.

Eine Methode zur Herstellung von Carbonfaser-haltigen Pellets mit geeigneten schüttgutmechanischen Eigenschaften für die Weiterverarbeitung in der Compoundierung ist in DE 102010008349 A1 beziehungsweise EP2536545 B1 beschrieben. Dazu werden aus carbonfaserhaltigen Abfällen oder Altteilen isolierte Carbonfasern, Carbonfaserbundel oder eine Mischung mit einem thermoplastischen Matrixmaterial flächig ablegt, und z.B. in Form eines Vlieses möglichst gleichmäßig gemischt. Unter Wärmeeinwirkung wird Plattenmaterial gepresst, das nach Abkühlung zu Pellets. Plättchen oder Chips zerkleinert wird. Dieses Verfahren ist jedoch sehr aufwändig. Der technische Aufwand der Herstellung eines Halbzeuges nur zu dem Zwecke der Schneidgranulierung in einen dosierfähigen Zustand für die Compoundierung ist nicht wirtschaftlich.

WO 2014/037724 A1 offenbart ein Verfahren zur Herstellung eines Kohlenstofffaser-Verbundmaterials umfassend das Zerkleinern, Schneiden oder Stanzen von Kohlenstofffasermaterial und Extrudieren der zerkleinerten oder gehackten Kohlefaser mit Thermoplasten. Dieses Dokument offenbart kein Abtrennen der rieselfähigen Carbonfasern von den nicht rieselfähigen wollartigen Carbonfasern. EP 2 789 441 A1 offenbart ein Verfahren zum Recycling von Abfallbreitwarenmaterial zu einer Bulk Molding Compound umfassend das Anwenden von Wärme und Druck auf das Breitwarenmaterial.

JP 2004 338194 offenbart ein Verfahren zur Herstellung eines regenerierten Formmaterials durch Recycling einer Struktur aus faserverstärktem Formmaterial, wobei Kunststoffstaub von rieselfähigen Fasern abgetrennt wird. US 2007/045456 A1 offenbart ein Verfahren umfassend das Scheren einer Faserquelle, um ein erstes Fasermaterial bereitzustellen, und das Durchleiten des ersten Fasermaterials durch ein Sieb mit einer bestimmten Öffnungsgröße, um ein zweites faseriges Material bereitzustellen, wobei sämtliches abgetrenntes Fasermaterial als rieselfähiges Fasermaterial beschrieben wird. DE 90 00 291 U1 offenbart eine Vorrichtung zum Klassifizieren von Tabak für die Herstellung von Rauchwaren unter Verwendung einer linearen Vibrationsförderrinne.

Es wurde nun überraschend gefunden, dass die oben genannte Aufgabe gelöst wird durch ein Verfahren gemäß Anspruch 1, umfassend das Compoundieren einer nicht rieselfähigen Carbonfaser mit mindestens einem Polymergranulat in einem Plastagglomerator.

Seit vielen Jahren sind Verfahren zum Recycling von thermoplastischen Polymerfolien oder Faserresten mit Hilfe sogenannter Plastagglomeratoren bekannt. Hierbei wird das voluminöse Aufgabegut mittels einer Förderschnecke vorverdichtet und in ein Rotor-Statorsystem eingebracht. Im Spalt zwischen Rotor und Stator wird das Polymermaterial durch Reibung bis auf seine Erweichungstemperatur erwärmt und zu Agglomeraten weiterverdichtet.

Prinzipiell haben zwei unterschiedliche Bauarten von Plastagglomeratoren breite Anwendung erlangt.

Eine erste Bauart verwendet profilierte Scheiben. Der Spalt zwischen Rotor und Stator verjüngt sich von der Mitte zum Außenrand auf wenige Millimeter. Die Umfangsgeschwindigkeit der Rotorscheibe liegt am Außenrand über 80 m/s. Über die Drehzahl der Zuführschnecke und den verstellbaren Spaltabstand wird die Verarbeitungstemperatur in den geeigneten Arbeitsbereich gebracht. Das angeschmolzene Material wird in unregelmäßigen geformten länglichen Gebilden aus der Maschine geschleudert und pneumatisch weggefördert. Im Luftstrom kühlen die Partikel ab und erstarren. Ein derartiges Verfahren ist zum Beispiel schon 1965 in der Offenlegungsschrift DE 14 54 875 beschrieben.

Eine zweite Bauart verwendet eine feststehende, flach zylindrische Plastifzierkammer mit einer Lochmatrize als Mantelfläche. In der Plastifizierkammer laufen Reibflügel mit einer Umfangsgeschwindigkeit von nur wenigen Metern pro Sekunde um. Das durch die Reibungswärme fließfähig gewordene Aufgabegut wird durch die Löcher einer Matrize gepresst und dort von umlaufenden Messern direkt in zylinderförmige Granulate geschnitten. Ein derartiges Verfahren ist zum Beispiel in der Offenlegungsschrift DE 26 14 730 beschrieben.

Es wurde überraschend gefunden, dass Plastagglomeratoren der zweiten Bauart bevorzugt für die Durchführung des erfindungsgemäßen Verfahrens geeignet sind.

Die oben beschriebenen Plastagglomeratoren werden gemäß dem Stand der Technik auch zum Herstellen von Compounds bestehend aus Polymer und organischen oder anorganischen Zuschlagstoffen verwendet. Dies können auch Fasern sein. Diese Möglichkeit ist zum Beispiel im Patent DE 3842072 C1 erwähnt. In der Firmenschrift K480 D "Plast-Agglomerator-Anlagen" der Firma Pallmann Maschinenfabrik GmbH & Co KG ist aufgeführt, dass die Herstellung von Compounds aus Kunststoffpulver, Folien, Fasern, Schaumstoff sowie Kautschukgranulaten mit anorganischen oder organischen pulverigen oder faserigen Füllstoffen wie Kreide, Holz, Papier, Leder, Textilien Bagasse, Baumwollstängel oder Reisschalen machbar ist. Nicht erwähnt ist aber die Einsatzmöglichkeit Compounds aus Polymergranulat und hochfesten Langfasern möglich ist, wie es Carbonfasern sind. Eine solche Einsatzmöglichkeit war auch für den Fachmann unerwartet, da davon auszugehen war, dass die festen Langfasern die Löcher der Lochmatritze schnell verstopfen würden.

Die oben beschriebenen Plastagglomeratoren verarbeiten thermoplastische Folien oder Faserabfälle problemlos. Plastagglomeratoren mit Reib-Scheiben als Rotor-Stator-System können jedoch nicht mit Polymer-Granulat alleine betrieben werden. Die Spaltweite müsste zum Aufschmelzen zum Erfassen des Polymer-Granulates und zum Erwärmen durch Reibungswärme stark reduziert werden. Dabei treten dann aber schnell so hohe Kräfte auf, dass der Antrieb der Agglomeratorscheibe überlastet wird.

Es war daher überraschend, dass es möglich ist, mittels dieser Plastagglomeratoren eine Compoundierung von Polymer-Granulat mit nicht aufschmelzbaren Fasern zu erreichen.

Hierfür ist es vorteilhaft, die Plastagglomeratoren mit einem Gemisch aus Polymer-Granulat und Fasern anzufahren. Eine stabile Mischung aus Polymer-Granulat und Fasern ist jedoch vorab nicht herstellbar. Die Komponenten entmischen sich bei jedem Fördervorgang sofort wieder. Beide Komponenten müssen also separat dosiert der Förderschnecke des Plastagglomerators zugegeben werden.

Das Aufgabegut wird in einer typischen Ausführungsform einem Silo mit Räumarm und Einwellen-Austragsschnecke zugeführt. Die zumeist als Stopfschnecke ausgeführte Förderschnecke drückt das Aufgabegut in den eigentlichen Plastagglomerator. Dort wird das Material plastifiziert und je nach Bauart in maximal etwa 10 Zentimeter lange Stränge geformt. Diese werden pneumatisch zu einer Schneidmühle gefördert. Auf dem Weg dahin kühlen die Agglomerate soweit ab, so dass sie eine hinreichende Formfestigkeit erlangen. In der Schneidmühle wird das agglomerierte Material in Granulat von vorzugsweise maximal 8 mm Partikelgröße zerkleinert.

Es entsteht dabei üblicherweise eine breite Partikelverteilung mit einem meist unerwünschten Feinanteil. Das Mahlgut wird dann abgesaugt und einer Klassierstufe zugeführt. Üblicherweise wird für die Klassierung ein Zick-Zack-Sichter verwendet. Er übernimmt die Abtrennung des Feinanteils. Das Feingut wird vorzugsweise pneumatisch zum Aufgabegut-Silo zurückgeführt. Das entstaubte Granulat wird in die Fertiggutabfüllung geleitet.

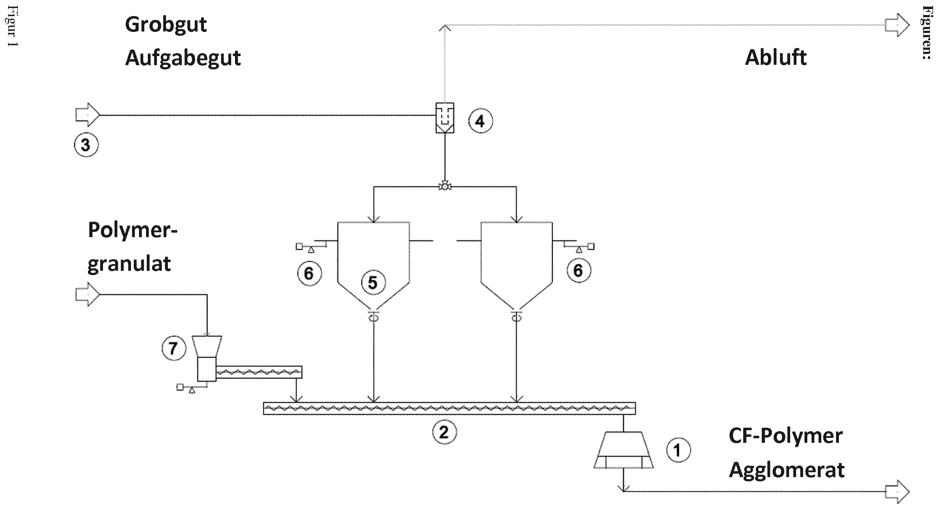

Eine denkbare Ausführungsform ist schematisch in Figur 1 dargestellt, nämlich die Plastagglomeration mit Variation der Aufgabegutzugabe, schematische Darstellung der separaten Beschickung mit Fasern und Polymer-Granulat.

Die Bezugszeichen haben dabei in Figur 1 folgende Bedeutung:
(1) Plastagglomerator
(2) Stopfschnecke
(3) pneumatische Förderung
(4) Aufgabegut-Abscheidefilter
(5) Räumbodensilo für Fasermaterial
(6) Wägeeinrichtung
(7) Differential-Dosierschnecke für Polymer-Granulat

Hierzu muss der Faservorlagebehälter (5) auf Wägezellen (6) gesetzt werden. Aus der Abnahme der Masse lässt sich der Faser-Massenstrom ermitteln (Prinzip der Differential-Dosier-Waagen). Die Geschwindigkeit der Förderschnecke (2) wird so geregelt, dass ein vorgegebener Fasermassenstrom konstant gehalten wird.

Die Beschickung des Faservorlagebehälters muss entsprechend diskontinuierlich erfolgen. Während der Nachchargierung wird die Drehzahl der Welle konstant gehalten Dies ist das übliche Verfahren bei Differential-Dosier-Waagen. Beim Nachfüllen des Vorlagebehälters wird kurzzeitig von gravimetrischer Dosierung auf volumetrische Dosierung umgestellt.

Dies kann durch Verwendung zweier Fasersilos vereinfacht werden. Während ein Silo die Fasern gravimetrisch dosiert der Förderschnecke zuführt wird der zweite Silo befüllt. Geht der Vorrat im ersten Silo zur Neige kann die Zuführung von Schnittgut auf den ersten Silo und der Austrag der Fasern auf die Plastagglomerator -Förderschnecke auf den zweiten Silo umgeschaltet werden. Dadurch wird nahezu ständig eine gravimetrische Dosierung aufrechterhalten.

Das Polymer-Granulat wird separat über eine konventionelle Differential-Dosier-Waage [7] vorzugsweise am Anfang der Plastagglomerator-Förderschnecke zugeführt. Der Massestrom wird nach dem Fasermassenstrom entsprechend dem gewünschten Faser-Massenanteil im Agglomerat geregelt.

Die Förderschnecke des Plastagglomerators wird als sogenannte Paddelschnecke erforderlichenfalls mit Gegenhaken als Mischelemente ausgeführt, um eine möglichst homogene Mischung aus Fasern und Polymer-Granulat zu erzeugen.

Die Zufuhr einer homogenen Mischung aus Fasern und Polymer-Granulat ist die Voraussetzung, um stabile Prozessbedingungen zu erreichen, die einen kontinuierlichen, störungsfreien Betrieb zulassen.

Für das erfindungsgemäße Verfahren geeignete Polymere sind alle thermoplastischen, also aufschmelzbaren Kunststoffe, vorzugsweise Polyethylen, Polypropylen, Polystyrol, Polyvinylchlorid, Acrylnitril-Butadien-Styrol und Polyamid. Ein ganz besonders bevorzugtes Polymer-Granulat ist Polyamid- Granulat.

Die genauen Prozessparameter kann der Fachmann ohne weiteres aufgrund seines Fachwissens anhand des jeweiligen Stoffsystems ermitteln.

Ein geeignetes Verfahren zur Aufbereitung von Carbonfasermatten in Carbonfaser-haltiges Polymer-Compound unter Nutzung des erfindungsgemäßen Verfahrens umfasst folgende Schritte: das Zerkleinern der carbonfaserhaltigen Materialien, das anschließende Abtrennen der rieselfähigen Carbonfasern von den nicht rieselfähigen wollartigen Carbonfasern, das Compoundieren der abgetrennten rieselfähigen Carbonfasern mit einem Polymer-Granulat einerseits und das Compoundieren der nicht rieselfähigen wollartigen Carbonfasern mit Polymergranulat in einem Plastagglomerator unter Bildung eines Agglomerats andererseits. Im Rahmen eines solchen erfindungsgemäßen Verfahrens zur Aufbereitung von Carbonfasermatten ist im Anschluss an den erwähnten Zerkleinerungsschritt und vor der Compoundierung im Plastagglomerator eine Abtrennung der rieselfähigen Faseranteile vorzunehmen.

Es wurde nun zusätzlich gefunden, dass es vorteilhaft ist, diese Abtrennung der rieselfähigen Faseranteile mit einer Trommelsiebmaschine durchzuführen. Hierdurch wird eine schonende Umwälzung der wollartigen Schnittfaser erreicht. Die Durchmischung kann durch Mitnehmer in der Siebtrommel unterstützt werden. Dies können im einfachsten Fall in die Bohrungen der Sieblochungen eingeschraubte Schraubenbolzen sein. Die Anordnung der Mitnehmer kann spiralförmig ausgeführt werden. Je nach Drehrichtung hin zur Eintragsseite oder weg von der Eintragsseite kann die Verweilzeit und damit die Ausbringung beeinflusst werden. Eine andere Möglichkeit zur Beeinflussung der Verweilzeit ist die Neigung der Siebtrommel.

Mit dieser Einrichtung konnte die die Ausbringung von Schnittfasern, die aus unidirektionalen Gelegeresten gewonnen wurden, auf bis zu 65 % gesteigert werden.

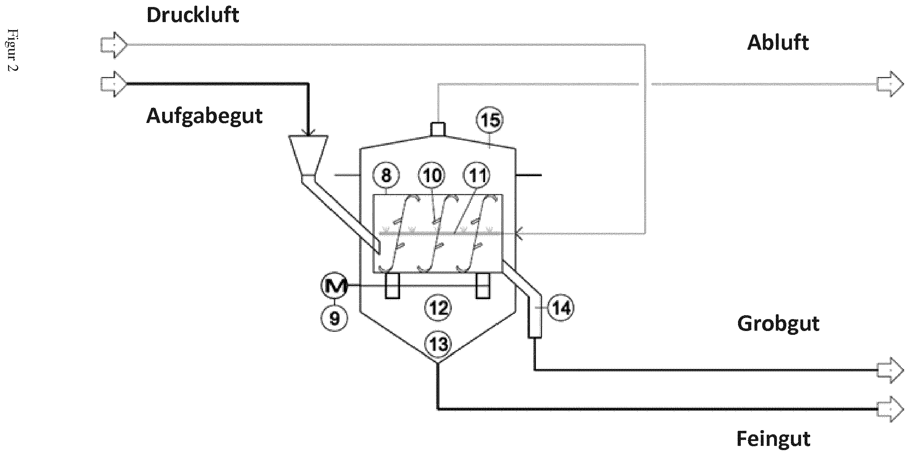

Eine besonders geeignete Ausführungsform der Trommelsiebmaschine ist in Figur 2 wiedergegeben. Die Bezugszeichen haben dabei in Figur 2 folgende Bedeutung:
(8) rotierende Siebtrommel
(9) Reibrollenantrieb
(10) Mitnehmer
(11) Düsenstock
(12) Aufgabegut-Schurre
(13) Feingut-Auslass
(14) Grobgut-Auslass
(15) Staubschutzhaube

In einer weiteren bevorzugten Ausführungsform wird die Abtrennung der rieselfähigen Fasern durch den Einsatz schneller Luftströmungen unterstützt. Dies kann beispielsweise durch eine schonende pneumatische Förderung des Aufgabegutes zur Trennvorrichtung erfolgen. Es können auch zusätzlich Luftdüsen innerhalb der Trennvorrichtung angeordnet werden.

Häufig wird bei der Aussortierung der rieselfähigen Carbonfaser-Bündel auch ein unerwünschter Anteil an Langfasern in die Siebdurchgang-Fraktion ausgetragen. Daher wird vorzugsweise in einer nachgeschalteten Siebstufe (Klassiersiebung) der Langfaser-Durchschlag abgetrennt. Die Abtrennung der Langfasern kann grundsätzlich mit jeder konventionellen Siebmaschine durchgeführt werden. Gleichzeitig kann gegebenenfalls die Faserlängenverteilung des rieselfähigen Carbonfaser-Anteils eingeengt werden. Hierfür eignen sich Siebmaschinen, wie sie zur Abtrennung von Überlängen aus Kunststoffgranulat bekannt sind.

Besonders geeignet sind Plansiebe mit einer großen Amplitude. Bei Plansieben erfolgt die Erregung der Schwingung parallel zur Ebene der Siebeinlage. Im Unterschied zu sogenannten Wurfsiebmaschinen hebt das Siebgut nicht von der Siebfläche ab, sondern es rutscht nur über die Siebeinlage. Ein Aufrichten von Fasern wird vermieden. Dies ist die Voraussetzung um eine Trennung nach der Länge zu erreichen.

In DE 10 2007 052 473 A1 wird das unerwünschte Aufrichten von länglichen Partikeln durch eine Abdeckung über der Siebfläche vermieden.

DE 39 07 777 A1 beschreibt ein Verfahren, das gewölbte Siebeinlagen verwendet. Längliche Teile rollen dabei von der Mitte zur Seite. Durch einen Höhenversatz der Randzone zur Siebzone wird vermieden, dass bereits abgetrennte längliche Partikel wieder auf die Siebfläche zurückgeworfen werden.

In EP 2 055 395 A2 wird eine Ausrichtung der Siebgutpartikel durch einen sich verjüngenden Zuführkanal angestrebt.

Es wurde nun gefunden, dass es für eine gute Trennschärfe besonders vorteilhaft ist, wenn die Fasern in Förderrichtung der Siebschwingung ausgerichtet werden, indem Lochbleche als Siebeinlagen verwendet werden, in die Längsnuten eingefräst sind.

In einer bevorzugten Ausführungsform wird für die Klassiersiebung des abgetrennten rieselfähigen Faseranteils eine Linearschwingsieb-Maschine eingesetzt, bei der mit Längsnuten profilierte Lochblech-Siebe verwendet werden.

Die in Produktförderrichtung eingearbeiteten Nuten haben dabei vorzugsweise ein halbkreisförmiges Profil.

Denkbar ist es auch, ein Querstellen der Fasern durch kleine Hürden zwischen den Sieblochreihen zu vermindern.

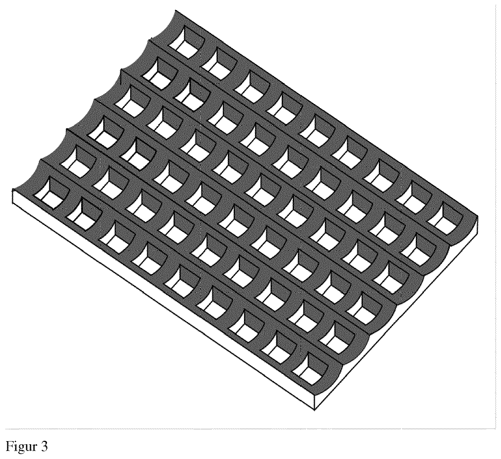

Figur 3 zeigt eine solche mit Längsnuten profilierte Siebeinlage. Bei Verwendung einer solchen Siebeinlage kann das Siebgut in wirrer Schüttung aufgegeben werden. Auf dem Weg über die Siebflächen richten sich die Fasern zwangsweise in Förderrichtung aus. Einmal ausgerichtet wird ein Querstellen der Fasern durch die Profilierung weitgehend reduziert. Wichtig dabei ist, dass die Siebmaschinen-Bewegung keine Wurfkomponente auf das Siebgut ausübt.

Mit der hier beschriebenen Vorrichtung kann mittels einer zweistufigen Siebung auch eine in der Faserlängenverteilung eng begrenzte Siebfraktion separiert werden, die für die Herstellung von Faservliesen einsetzbar ist.

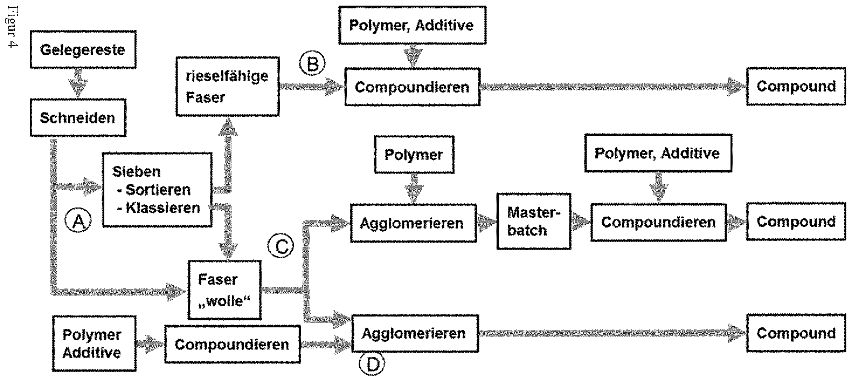

In der Figur 4 sind einige mögliche Verfahrensvarianten schematisch dargestellt.

Zunächst werden die Fasermatten, die sogenannten Gelegereste, geschnitten. In einem Folgeschritt werden rieselfähige Fasern aussortiert, die durch Klassiersiebung aufbereitet werden (A) können. Diese Fasern können in einem mit entsprechend angepassten Dosiervorrichtungen ausgerüsteten Extruder mit Polymergranulat und Additiven zum Endprodukt compoundiert werden (B). Als vergleichbares Beispiel, das nicht Teil der Erfindung ist, ist auch möglich, die geschnittenen Fasern direkt komplett der Agglomeration zuzuführen. Es ergeben sich nun zwei Möglichkeiten. Die Fasern werden mit Polymer-Granulat als Bindemittel als Masterbatch agglomieriert. Dieses Agglomerat kann dann mit weiterem Polymer und Additiven im Extruder compoundiert werden (C).

Die andere Variante sieht vor, Polymergranulat mit Additiven zu compoundieren und im Plastagglomerator die Fasern einzuarbeiten (D). In diesem Fall ist das Plastagglomerat schon das Endprodukt.

### Ausführungsbeispiel 1

Carbonfaser Verschnittreste aus bis zu 10 Lagen mit einander verklebten Gelegen wurde mit einer Guillotine Schneidemaschine durch zweifachen Schnitt mit einer Schnittweite von 6 mm zerkleinert.

Zum Abtrennen eines rieselfähigen Faseranteils wurde die Schnittfaser einem Trommelsieb mit einem Trommeldurchmesser von 500 mm und einer Trommellänge von 1000 mm zugeführt. Die Sieb-Lochweite betrug 10 Millimeter. Bei einer zweifachen Passage konnte ein Anteil von 25 % des Aufgabegutes als rieselfähige Faser abgetrennt werden. Der rieselfähige Anteil der Faser wurde mit einem Taumelsieb mit einer Sieblochweite von 10 mm einer Schutzsiebung unterworfen, um einen Durchschlag von Langfasern abzutrennen.

Nicht rieselfähiges Schnittgut wurde mit Hilfe eines Plastagglomerator mit Reibscheiben mit einem Durchmesser von 700 mm zugeführt. Die Scheibenumfangsgeschwindigkeit betrug 85 m/s. Die Stopfschnecke des Agglomerators wurde mit einem Förderband beschickt. Fasern und Polyamid Granulat wurden hier manuell zugeführt und einigerrmaßen gleichmäßig zugegeben. Der Durchsatz der manuellen Beschickung lag in einem Bereich von etwa 300 kg/h Polyamid Granulat und Carbonfasern. Der Faseranteil betrug um 30 Prozent. Bei einer Spaltweite zwischen Rotor- und Stator von 5 mm und einer an der Statorscheibe gemessenen Temperatur zwischen 80 und 90 °C wurden Agglomerate erzeugt. Die Agglomeration mit Polyamid-Granulat im Scheibenagglomerator ist außerordentlich schwierig und im Dauerbetrieb mit Standard-Maschinen nicht beherrschbar. Es ist notwendig, neben einer sehr gleichmäßig dosierten Beschickung die Verarbeitungstemperatur konstant zu halten. Sobald die Verarbeitungstemperatur nur wenige Grade zu warm wird, wird das Material schmelzflüssig aus dem Agglomerierwerkzeug herausgeschleudert. Es kann nicht mehr hinreichend schnell erstarren, sondern es klebt an den Wänden des Austragkanals des Agglomerators fest. Dieser Kanal setzt sich dann sehr schnell zu und dieser Vorgang bringt den Prozess zum Erliegen. Notwendige Voraussetzung für den Betrieb von Scheibenagglomeratoren ist eine sehr schnelle Regelung der Spaltweite zum Konstanthalten der Temperatur. Die hier verwendete Anlage war ungeregelt und der Agglomerations-Vorgang war deshalb auch nur kurzzeitig über wenige Minuten Laufzeit beherrschbar.

Weiterhin wurde festgestellt, dass die aus mit dem Scheibenagglomerator hergestellten Probekörpern eine unzureichende Zugfestigkeit aufweisen. Vermutlich unterliegen die Carbonfasern in der Agglomerationszone einer sehr hohen Reibungs-Beanspruchung und werden dabei sehr stark eingekürzt. Damit sind keine zufriedenstellenden mechanischen Eigenschaften in der späteren Anwendung mehr erzielbar.

### Ausführungsbeispiel 2

Mit einem analog zum Ausführungsbeispiel 1 durch Schneiden und Sieben vorbereiteten FaserMaterial wurden Versuche mit einem Matrizenagglomerator durchgeführt. Als Bindemittel für die Agglomeration wurde sowohl Polyamid-Granulat des Typ B24 des Herstellers LANXESS verwendet, wie auch ein Compound, das aus dem genannten Polyamid durch Zugabe von Additiven, hergestellt wurde.

Verfahrensparameter:
- Plastagglomerator Typ Pallmann PFV 250
- Matrizendurchmesser: 250 mm
- Lochweite der Matrizenbohrungen: 4 mm
- Durchsatz: 100 kg/h Fertiggut
- Faserfüllgrad : 50 %
- Oberflächentemperatur:, gemessen an der Matrizenaußenseite, 185 bis 195°C bei Agglomeration mit PA-Granulat als Bindemittel und 217 bis 221 °C bei Zugabe von PA-Compound.

Im Unterschied zum Scheibenagglomerator konnte der Matrizenagglomerator überraschenderweise völlig problemlos betrieben werden.

Aus den Compound-Agglomeraten wurden Zugproben hergestellt. Deren Zugfestigkeit liegt etwa bei 90 % der Zugfestigkeit, die mit Neuware von Carbonfaser-Kurzschnitt ("chopped strands") erreicht werden kann.

## Patentansprüche

1. Verfahren zum Recycling von carbonfaserhaltigen Materialien umfassend das Zerkleinern der carbonfaserhaltigen Materialien, das anschließende Abtrennen der rieselfähigen Carbonfasern von den nicht rieselfähigen wollartigen Carbonfasern, das Compoundieren der abgetrennten rieselfähigen Carbonfasern mit einem Polymer-Granulat und das Compoundieren der nicht rieselfähigen wollartigen Carbonfasern mit Polymergranulat in einem Plastagglomerator (1) unter Bildung eines Agglomerats.

2. Verfahren gemäß Anspruch 1, **dadurch gekennzeichnet, dass** das Abtrennen der rieselfähigen Carbonfasern von den nicht rieselfähigen wollartigen Carbonfasern mit einer Trommelsiebmaschine erfolgt.

3. Verfahren gemäß Anspruch 2, **dadurch gekennzeichnet, dass** das Abtrennen der rieselfähigen Carbonfasern durch den Einsatz schneller Luftströmungen unterstützt wird.

4. Verfahren gemäß einem der Ansprüche 1 bis 3, **dadurch gekennzeichnet, dass** die abgetrennten rieselfähigen Carbonfasern vor dem Compoundieren einer Klassiersiebung unterworfen werden.

5. Verfahren gemäß Anspruch 4, **dadurch gekennzeichnet, dass** für die Klassiersiebung des abgetrennten rieselfähigen Faseranteils eine Linearschwingsieb-Maschine eingesetzt wird, bei der mit Längsnuten profilierte Lochblech-Siebe verwendet werden.

## Claims

1. Process for recycling carbon fibre-containing materials comprising comminuting the carbon fibre-containing materials, subsequently separating the free-flowing carbon fibres from the non-free-flowing wool-like carbon fibres, compounding the separated free-flowing carbon fibres with a polymer granulate and compounding the non-free-flowing wool-like carbon fibres with polymer granulate in a plastics agglomerator to form an agglomerate.

2. Process according to Claim 1, **characterized in that** the separating of the free-flowing carbon fibres from the non-free-flowing wool-like carbon fibres is performed with a drum sieving machine.

3. Process according to Claim 2, **characterized in that** the separating of the free-flowing carbon fibres is assisted by using rapid air flows.

4. Process according to one of Claims 1 to 3, **characterized in that** the separated free-flowing carbon fibres are subjected to sieve grading before the compounding.

5. Process according to Claim 4, **characterized in that** the sieve grading of the separated free-flowing fibre fraction employs a linear motion vibratory sieving machine which uses perforated plate sieves profiled with transverse grooves.

## Revendications

1. Procédé de recyclage de matériaux contenant des fibres de carbone, comprenant le broyage des matériaux contenant des fibres de carbone, la séparation ultérieure des fibres de carbone fluides des fibres de carbone laineuses non fluides, le mélange des fibres de carbone fluides séparées avec un granulat de polymère et le mélange des fibres de carbone laineuses non fluides avec un granulat de polymère dans un agglomérateur de plastique (1) avec formation d'un agglomérat.

2. Procédé selon la revendication 1, **caractérisé en ce que** la séparation des fibres de carbone fluides des fibres de carbone laineuses non fluides a lieu avec une machine de tamisage à tambour.

3. Procédé selon la revendication 2, **caractérisé en ce que** la séparation des fibres de carbone fluides est favorisée par l'utilisation de courants d'air rapides.

4. Procédé selon l'une quelconque des revendications 1 à 3, **caractérisé en ce que** les fibres de carbone fluides séparées sont soumises à un tamisage de classification avant le mélange.

5. Procédé selon la revendication 4, **caractérisé en ce qu'**une machine à tamis oscillant linéaire est utilisée pour le tamisage de classification de la fraction de fibres fluide séparée, dans laquelle des tamis à plaques perforées profilés avec des rainures longitudinales sont utilisés.
